**Europäisches Patentamt**

**European Patent Office**

**Office européen des brevets**

(19)

(11) Veröffentlichungsnummer: **0 041 224**
**A1**

(12) ## EUROPÄISCHE PATENTANMELDUNG

(21) Anmeldenummer: **81104057.5**

(22) Anmeldetag: **27.05.81**

(51) Int. Cl.³: **B 65 G 63/02**

(30) Priorität: **02.06.80 DE 3020904**

(43) Veröffentlichungstag der Anmeldung:
**09.12.81 Patentblatt 81/49**

(84) Benannte Vertragsstaaten:
**AT BE FR GB IT NL**

(71) Anmelder: **Mohr & Federhaff Aktiengesellschaft Mannheim**
**Rohrhoferstrasse 44 Postfach 1502**
**D-6800 Mannheim 1(DE)**

(72) Erfinder: **Koos, Reiner**
**Dieselstrasse 6**
**D-6834 Ketsch(DE)**

(54) **Umschlag- und Transportsystem für See- und Binnenhäfen sowie sonstiger Umschlag- und Lagerplätze.**

(57) Bei diesem Umschlag- und Transportsystem werden mittels einem Transportgerät 6 Umschlaggeräte wie Wippdrehkrane 4 an ihren Einsatzort gebracht und dort auf Abstützplatten 5 oder über Laufräder auf Schienen 14 abgesetzt.

Das Umschlaggut wird auf Groß-Paletten, 3, 9, 16 und palettenähnlichen Traggestellen oder transportablen Übergabetrichtern 11 verladen und durch Unterfahren derselben mit dem frei gewordenen Transportgerät 6 an die gewünschten Orte gebracht ohne Zuhilfenahme eines weiteren Hebezeuges.

**EP 0 041 224 A1**

- 1 -

Umschlag- und Transportsystem für See- und Binnenhäfen sowie sonstiger Umschlag- und Lagerplätze

Die Erfindung bezieht sich auf ein Gerätesystem für
Häfen und ähnliche Anlagen zum kaiseitigen Be- und
Entladen von Schiffen, für Materialtransporte und
Materialzwischenlagerung, bestehend aus Umschlaggeräten wie Dreh- und Wippdrehkranen, Schiffsbe-
und entladern, Großpaletten, palettenähnlichen Traggestellen und transportablen Übergabetrichtern, die mittels Schwerlast-Transportgeräten (Hubtransporter) an
jeden gewünschten Einsatzort gebracht werden.

Bei den herkömmlichen Hafenanlagen werden die Schiffe
meistens durch schienengebundene Hebezeuge be- und
entladen. Diese konventionelle Hafenausrüstung erfordert kaiseitig hohe Investitionen für Schienen,
Schienenfundamente und Stromversorgung der Krane.
Dabei ist der Auslastungsgrad dieser schienengebundenen Geräte systembedingt oft nicht so günstig, wie
dies aus der Sicht der Betreiber wünschenswert wäre,
da an den meisten Kaianlagen nicht immer etwas umgeschlagen wird oder der Umschlag mit einem anderen Gerät erfolgt, z.B. schiffseigenen Hebezeugen. In letzterem Fall stellen die kaiseitigen Krane sogar ein
Verkehrshindernis dar.

Auch die in der letzten Zeit in einigen Häfen eingesetzten Hafen-Mobilkrane sind wirtschaftlich betrachtet nicht voll befriedigend, da jedes Umschlaggerät mit einem eigenen Fahrgestell ausgerüstet ist, welches beim Einsatz des Kranes, der fast immer abgestützt werden muß, nicht benötigt wird, anderweitig aber nicht genutzt werden kann.

Aufgabe ist es, den in einem Hafen anfallenden Materialumschlag (Schiffsbe- und Entladung, Materialtransport und Materialzwischenlagerung) durch eine möglichst wirtschaftliche, aufeinander abgestimmte Gerätekombination zu lösen und somit eine optimale Nutzung aller Geräte zu erreichen.

Die Lösung dieser Aufgabe erfolgt gemäß der Erfindung durch die Kombination an sich bekannter Geräte bzw. Gerätemerkmale, und zwar:

Durch Be- und Entladegeräte, wie Dreh- und Wippkrane, Schiffsbe- und entlader oder ähnliche Geräte, durch Schwerlast-Hubtransporter und durch Paletten bzw. Traggestelle.

Die abgestützten Be- und Entladegeräte werden bei diesem Gerätesystem von einem Schwerlast-Hubtransporter unterfahren, durch Anheben der Fahrzeugplattform hochgehoben, an jeden beliebigen Einsatzort innerhalb des Hafens oder des Lagers transportiert und dort wieder abgesetzt.

Nach dem Gerätetransport steht der Hubtransporter für Transportaufgaben jeder Art zur Verfügung, wobei das zu transportierende Gut entweder direkt oder unter Zwischenschaltung von Großpaletten oder Spezial-Traggestellen transportiert werden kann.

Die billigen Großpaletten und die hohe Fahrzeugtragfähigkeit eignen sich gleichzeitig für eine schnell abrufbare Zwischenlagerung von größeren Materialmengen auf abgelegenen Lagerplätzen.

Sonder-Traggestelle, die ebenfalls durch den Hubtransporter aufgenommen werden, ermöglichen den Transport schwerster, sperriger Einzelstücke durch einen oder zwei Hubtransporter.

Der in vielen Häfen anfallende direkte Schüttgutumschlag Schiff-LKW kann durch Zwischenschaltung von großen mit dem Hubtransporter an beliebige Einsatzorte transportierbaren Übergabetrichtern wesentlich rationeller erfolgen.

Der Antrieb der Umschlaggeräte kann nach der Erfindung elektrisch, dieselelektrisch oder dieselhydraulisch erfolgen.

Ein weiteres Merkmal der Erfindung besteht darin, daß die Umschlaggeräte mit Abstützplatten und/oder mit Laufrädern mit verstellbaren oder fest fixierten Por-

- 4 -

talstützen versehen sind, die eine Durchfahrmöglichkeit zwischen den Stützen für LKW, Schienenfahrzeuge oder ähnliche Fahrzeuge ermöglichen.

Ferner sind nach der Erfindung die Umschlaggeräte (sofern erforderlich) zum Transport zusammenklappbar.

Der Schwerlast-Hubtransporter ist zur Durchführung des erfindungsgemäßen Verfahrens mit einer automatischen Niveauausgleichseinrichtung ausgestattet, um hochliegende Schwerpunkte während des Transportes in ihrer Position zu halten.

Nachstehend werden Ausführungsbeispiele nach der Erfindung anhand von Zeichnungen näher erläutert, wobei die Einsatzmöglichkeiten jedoch nicht auf die gezeigten Materialumschlagssituationen beschränkt sein sollen.

Es zeigt:

Fig. 1   Stückgutumschlag
Fig. 2   Langgutumschlag
Fig. 3   Schüttgutumschlag mit Übergabetrichtern
Fig. 4   Containerumschlag
Fig. 5   Umschlag von überschweren Gütern

Die angeführten Beispiele zeigen die verschiedenartigen Kombinationen der Erfindung.

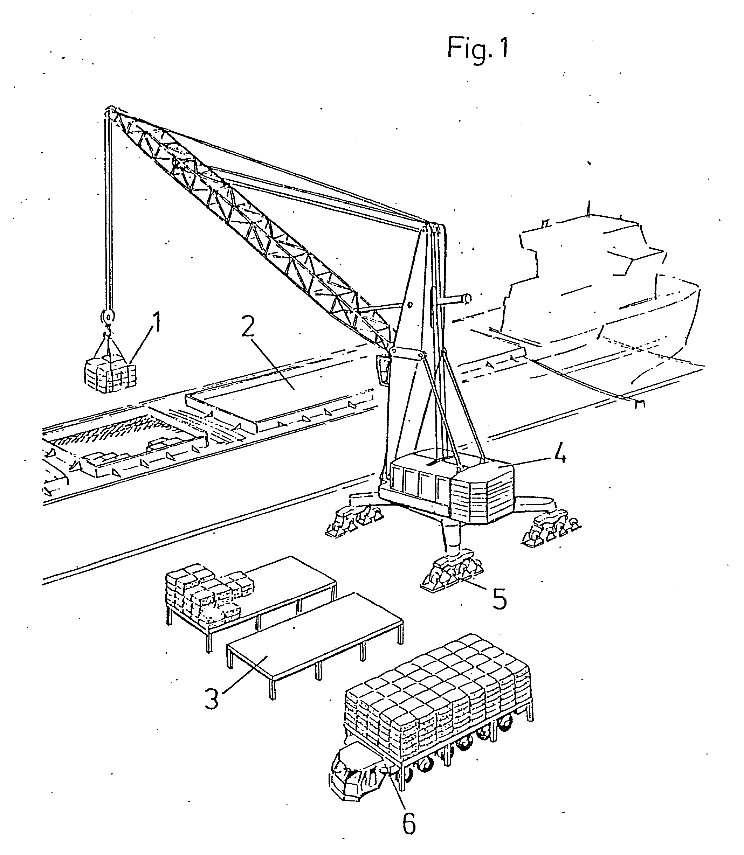

In Fig. 1 ist der Umschlag von Stückgut 1 vom Schiff 2 auf einfache Paletten 3 dargestellt. Der Umschlag erfolgt durch einen Wippdrehkran 4, der mittels Abstützplatten 5 stationär aufgebaut ist. Versetzt bzw. transportiert werden der Kran 4 und die Paletten 3 durch ein Transportfahrzeug 6, welches den Kran 4 oder die Paletten 3 unterfährt und durch Anheben der Plattform übernimmt. Kran 4 und Paletten 3 können hiernach an jeden beliebigen Ort zu weiteren Einsätzen transportiert werden. Durch die niedrige Bauart des Wippdrehkranes 4 ohne Portal kann letzteres nicht durch allgemeinen Verkehr unterfahren werden.

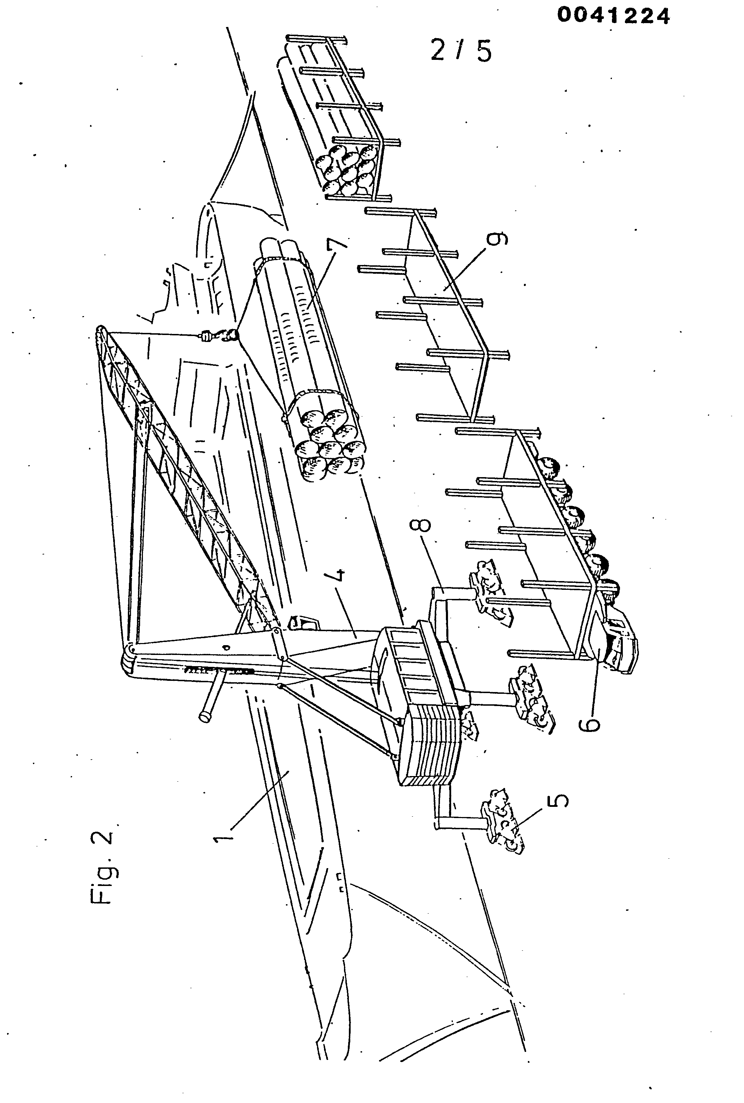

Die Fig. 2 zeigt einen Langgutumschlag, im Beispiel Rohre 7, die mittels eines Wippdrehkranes 4, der auf einem durchfahrbaren Portal 8 aufgebaut ist, vom Schiff 2 auf Spezialpaletten 9 umgeladen werden. Das Portal 8 des Kranes 4 ist ebenfalls stationär aufgebaut und mittels Abstützplatten 5 einsatzbereit dargestellt. Das Versetzen des Kranes 4 mit dem Portal 8 und der Paletten 9 erfolgt ebenfalls durch ein Transportfahrzeug 6. Zum Verstellen des Kranes 4 wird das Transportfahrzeug 6 in diesem Fall mit einem im Bild nicht dargestellten Zwischenrahmen ausgerüstet.

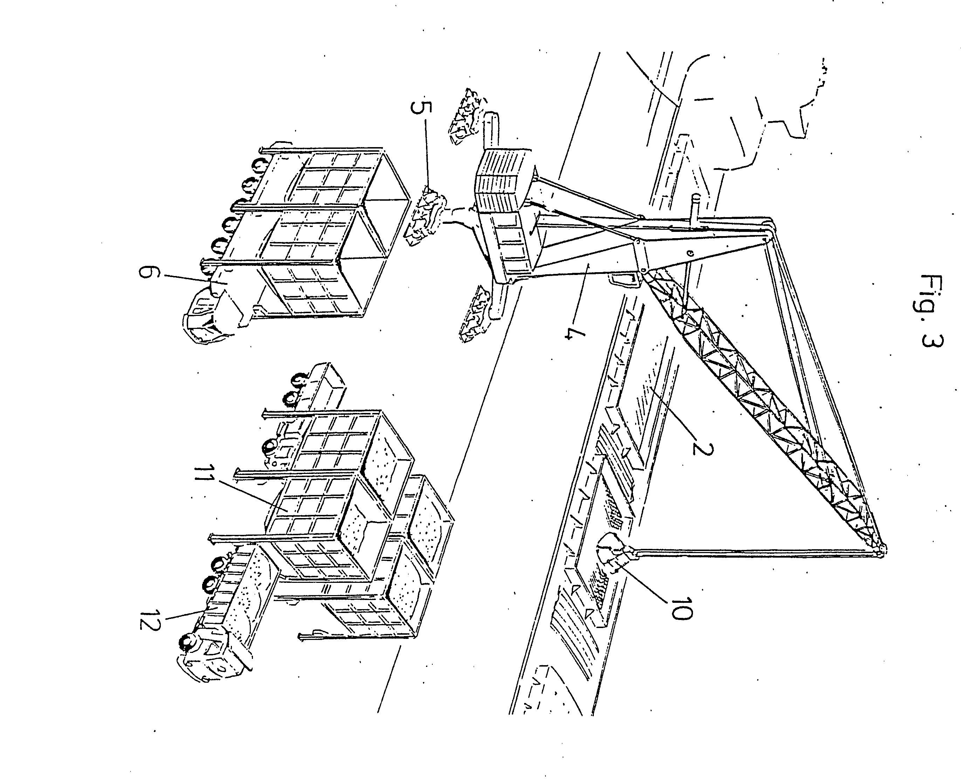

Ein Schüttgutumschlag ist in Fig. 3 dargestellt. Der auf Abstützplatten 5 aufgebaute Wippdrehkran 4 ohne Portal schlägt das Schüttgut mittels eines Greifers 10 vom Schiff 2 in transportable Übergabetrichter 11 um, die wie der Kran 4 von einem Transportfahrzeug 6 beliebig versetzt werden können. Ferner sind die Übergabetrichter 11 so ausgebildet, daß sie von Straßenfahrzeugen 12 unterfahren werden können und diese ohne zusätzliche Umschlaggeräte beladen werden können.

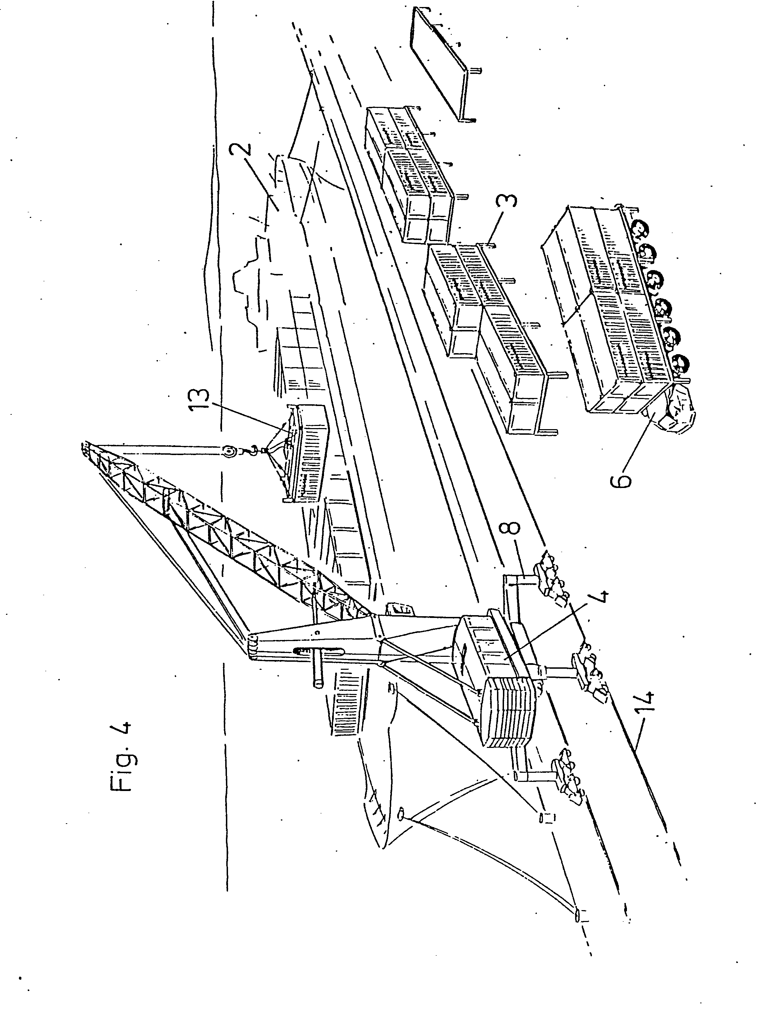

Fig. 4 zeigt den Containerumschlag mit Spreader 13 vom Schiff 2 auf Paletten 3 oder direkt auf im Bild nicht dargestellte andere Transportgeräte mittels eines Wippdrehkranes 4 mit durchfahrbarem Portal 8. Das Portal 8 des Wippdrehkranes 4 ist verfahrbar auf Schienen 14 aufgesetzt. Der Kran 4 mit Portal 8 läßt sich wie die Paletten 3 durch das Transportfahrzeug 6 an andere Standorte versetzen, wobei auf andere Schienenspurweiten durch schwenkbare Portalbeine 8 eingegangen werden kann.

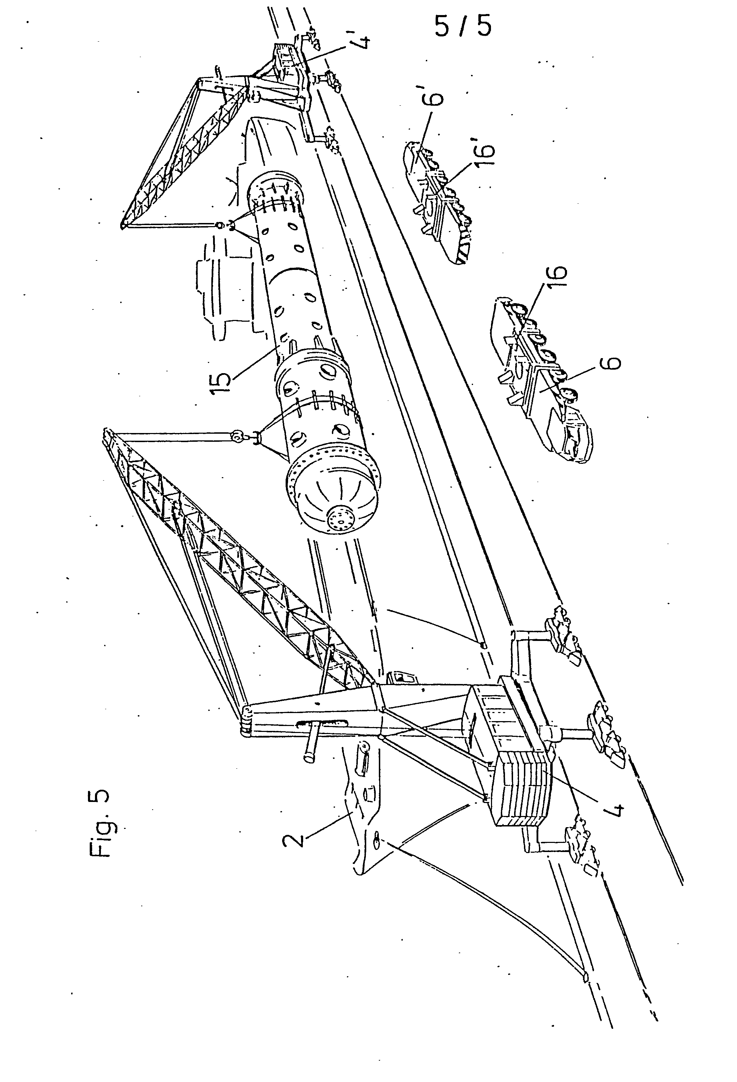

Als weiteres Beispiel zeigt Fig. 5 eine Entladung eines überschweren Gutes 15 vom Schiff 2 mittels 2 Wippdrehkrane 4, 4' auf Transportfahrzeuge 6, 6' mit Spezialpaletten 16, 16'.

1

<u>P a t e n t a n s p r ü c h e</u>

1. Gerätesystem für Häfen und ähnliche Anlagen zum
kaiseitigen Be- und Entladen von Schiffen, LKW's,
Waggons und sonstigen Transportgeräten für Materialtransporte und Materialzwischenlagerung durch Kombination an sich bekannter Umschlag- und Transportgeräte bestehend aus:

   a) An jeden beliebigen Ort über Abstützplatten 5
   aufstellbaren oder über Laufräder auf Schienen 14 verfahrbaren oder für beides kombiniert
   einsetzbaren, unterfahrbaren Umschlaggeräten
   wie Drehkranen, Wippdrehkranen 4, Be- und Entladern o.ä. Geräten,

   b) Großpaletten 3, 9, 16, palettenähnlichen Traggestellen und transportablen Übergabetrichtern 11,

   c) Schwerlast-Transportgeräten 6, welche die aufgeführten Umschlaggeräte 4, Groß-Paletten 3, Traggestelle 9, 16 und Übergabetrichter 11 durch Unterfahren und Anheben der Transportgeräte-Plattform 6 übernehmen, an jeden beliebigen Ort transportieren und dort abstellen können ohne Zuhilfenahme eines weiteren Hebezeuges.

2. Gerätesystem nach Anspruch 1 dadurch gekennzeichnet,
daß die Umschlaggeräte elektrisch, dieselelektrisch
oder dieselhydraulisch angetrieben werden.

3. Gerätesystem nach Anspruch 1 - 2 dadurch gekennzeichnet, daß die Umschlaggeräte 4 mit Portal 8 und Abstützplatten 5 und/oder mit Laufrädern ausgeführt
werden können.

- 2 -

4. Gerätesystem nach Anspruch 1 - 3 dadurch gekennzeichnet, daß die Umschlaggeräte 4 zum Transport zusammenklappbar sind.

5. Gerätesystem nach Anspruch 1 - 4 dadurch gekennzeichnet, daß für mehrere Umschlaggeräte 4 nur ein Transportgerät 6 benötigt wird.

6. Gerätesystem nach Anspruch 1 dadurch gekennzeichnet, daß das Transportgerät 6 die Krane 4 und Paletten 3, ohne Zuhilfenahme anderer Hebegeräte, mit seiner Ladeplattform aufhebt oder absetzt.

7. Gerätesystem nach Anspruch 1 und 6 dadurch gekennzeichnet, daß das Transportgerät 6 eine automatische Niveauausgleichseinrichtung besitzt, um hochliegende Schwerpunkte während des Transportes in ihrer Position zu halten.

Fig. 1

Fig. 2

Fig. 3

Fig. 4

Fig. 5

0041224

## 0041224

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | B 65 G 63/02 |
| | US - A - 4 090 620 (JOHANSSON)<br>* Spalte 2, Zeilen 17-68; Spalte 3, Zeilen 1-68; Figuren 1,2 *<br><br>-- | 1 | |
| | US - A - 2 379 094 (MAXON)<br>* Seite 2, Spalte 2, Zeilen 15-72; Figuren 1-10 *<br><br>-- | 1 | |
| | US - A - 4 049 135 (GLASSMEYER)<br>* Spalte 4; Operation; Figuren 1-3 *<br><br>-- | 1 | **RECHERCHIERTE SACHGEBIETE (Int. Cl.³)**<br><br>B 65 G |
| A | DE - C - 1 113 421 (CLARK EQUIP-MENT)<br>* Spalte 7, Zeilen 20-68; Spalte 8, Zeilen 1-4; Figur 1 *<br><br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-09-1981 | OSTIJN |